# EUROPEAN PATENT APPLICATION

(11) **EP 1 595 907 A1**
(43) Date of publication of application: **16.11.2005**
(21) Application number: 05290988.4
(22) Date of filing: 09.05.2005
(51) Int. Cl.: C08G 69/02, C08G 69/26, C08L 77/00, C08L 77/06

(54) **Transparent amorphous polyamides based on diamines and on tetradecanedioic acid**

(30) Priority: 14.05.2004 FR 0405259
(71) Applicant: Arkema, 92800 Puteaux (FR)
(72) Inventor: Linemann, Annett, 27550 Nassandres (FR); Bussi, Philippe, 78000 Versailles (FR); Blondel, Philippe, 27300 Bernay (FR)
(74) Representative: Neel, Henry

(57) **Abstract**

The present invention relates to a transparent amorphous polyamide which results from the condensation:
- of at least one diamine chosen from aromatic, arylaliphatic and cycloaliphatic diamines,
- of tetradecanedioic acid or of a mixture comprising at least 50 mol% of tetradecanedioic acid and at least one diacid chosen from aliphatic, aromatic and cycloaliphatic dicarboxylic acids.

The invention also relates to a composition comprising, by weight, 1 to 100% of the preceding polyamide and 99 to 0% of a semicrystalline polyamide.

The invention also relates to the objects composed of the composition of the invention, such as panels, films, sheets, pipes, profiles or objects obtained by injection moulding.

The invention also relates to objects covered with a transparent protective layer composed of the composition of the invention.

## Description

### Field of the invention

The present invention relates to transparent amorphous polyamides based on diamines and on tetradecanedioic acid. Advantageously, the diamines are cycloaliphatic diamines. The present invention also relates to the objects obtained from this composition.

Polyamides are polymers which are widely used for their numerous properties. Specifically, polyamides exhibit some or all of the properties listed below: transparency, impact, tensile and/or compressive strength, high resistance to external attacks, such as cold, heat, chemical agents, radiation, in particular UV radiation, and others. The arrival has consequently been seen of objects based on polyamides, such as, for example, spectacle frames, various housings, motor vehicle accessories, surgical materials, packaging or sporting goods.

### The prior art and the technical problem

The aim of the invention is to prepare polyamides which have good mechanical properties of stiffness and of toughness, good chemical resistance, good stress crack resistance, a high heat distortion temperature and a low moisture absorption.

Patent **US 2 512 606** discloses transparent polyamides obtained from methylenedi(cyclohexylamine) (CAS [1761-71-3]) and from linear dicarboxylic acids comprising from 6 to 10 carbon atoms. These polyamides do not have a sufficient stress crack resistance in the presence of alcohols. Furthermore, they can crystallize under certain conditions and, for this reason, do not retain their initial transparency. The 4,4'-methylene-bis(cyclohexylamine) or p-bis(aminocyclohexyl)methane employed in US 2 512 606 is often described under the name of PACM and consists of a mixture of cis-cis, cis-trans and trans-trans isomers. PACM is typically obtained by hydrogenation of methylenedianiline (CAS [101-77-9]). It is available commercially from BASF and Air Products. The examples in Patent US 2 512 606 use adipic acid or sebacic acid as linear dicarboxylic acid. Tetradecanedioic acid is not mentioned among the dicarboxylic acids which can be used.

Patent Application **DE 43 10 970** discloses in particular mixtures of linear dicarboxylic acids and of PACM comprising from 35 to 60 mol% and more particularly from 45 to 50.5 mol% of trans-trans isomers. Mention is more particularly made, among the linear dicarboxylic acids, of suberic acid, azelaic acid, sebacic acid, dodecanedioic acid and tridecanedioic acid. Sebacic acid and dodecanedioic acid are particularly preferred. Tetradecanedioic acid is not mentioned. Example 1 of Patent Application DE 43 10 970 describes a polyamide obtained by virtually equimolar mixing of PACM (comprising approximately 50 mol% of trans-trans isomers) and of dodecanedioic acid. This polyamide, often referred to as Polyamide PACM.12, exhibits, by differential scanning calorimetry (DSC), a glass transition temperature of 140°C, a melting point of 248°C and a recrystallization point of 180°C. Example 2 of Patent Application DE 43 10 970 describes a polyamide obtained by virtually equimolar mixing of PACM and of sebacic acid. This polyamide, often referred to as Polyamide PACM.10, exhibits, by DSC, a glass transition temperature of 149°C, a melting point of 269°C and a recrystallization point of 180°C.

The polyamide PACM.12 of Example 1 of Patent Application DE 43 10 970 is available commercially under the name of Trogamid® CX7323 from Degussa. The technical documentation of this product ("Transparent Polyamides with Outstanding Combination of Properties") clearly indicates the microcrystalline nature of this polymer. The microcrystallinity of the polyamide PACM.12 can improve some properties of transparent amorphous polyamides, such as the resistance to solvents or the stress crack resistance, but it can also be harmful to the transparency, in particular if the component based on polyamide PACM.12 is subjected to conditions which promote recrystallization. The technical documentation of the polyamide PACM.12 furthermore indicates that Trogamid® CX7323 absorbs 3.5% by weight of water at 23°C under saturated conditions. It is also specified that this water uptake does not make possible sterilization with steam.

The publication "Properties of a Polyamide Thermoplastic Based on 2,2-bis(4-aminocyclohexylpropane)" (Polymer Engineering and Science, January 1978, Volume 18(1), pp. 36-41) indicates that homopolyamides based on PACM and on linear dicarboxylic acids, such as adipic acid, suberic acid, azelaic acid, sebacic acid or dodecanedioic acid, are opaque and exhibit well defined crystallization and melting points. In contrast, homopolyamides based on isopropylidenedi(cyclohexylamine) (CAS [3377-24-0]), better known under the common name of PACP, with these same acids are transparent and colourless and do not exhibit, with the exception of the PACP.10 (sebacic acid) combination, signs of crystallinity. Tetradecanedioic acid is not mentioned in these studies.

Patent Application **EP 0 725 101** discloses more particularly transparent amorphous polyamides obtained from 2,2'-dimethyl-4,4'-methylenebis(cyclohexylamine) (CAS [6864-37-5]) and from linear dicarboxylic acids, and their blends or alloys with homopolyamides. The preferred linear dicarboxylic acids comprise from 8 (suberic acid) to 12 (dodecanedioic acid) carbon atoms. Sebacic acid and dodecanedioic acid, and their mixture, are particularly preferred. Tetradecanedioic acid is not mentioned.

The 2,2'-dimethyl-4,4'-methylenebis(cyclohexylamine) or bis(3-methyl-4-aminocyclohexyl)methane employed in EP 0 725 101 is often described under the name of BMACM and consists of a mixture of cis-cis, cis-trans and trans-trans isomers. It is available commercially from BASF under the name of Laromin C260.

Example 1 of Patent Application EP 0 725 101 describes a polyamide obtained by virtually equimolar mixing of BMACM (Laromin C260) and of dodecanedioic acid. The polymer obtained, often known as Polyamide BMACM.12, is transparent, exhibits good mechanical properties and exhibits stress crack resistance in the presence of alcohols. Its glass transition temperature, measured by DSC, is 157°C. A melting or recrystallization phenomenon is not observed. Example 2 (comparative) of Patent Application EP 0 725 101 reproduces Example 1 of Patent Application DE 43 10 970 and confirms the microcrystalline nature of the polyamide PACM.12. The polyamide BMACM.12 of Example 1 of Patent Application EP 0 725 101 is available commercially under the name of Grilamid® TR90 from EMS. The technical documentation of this product ("A Transparent Polyamide with Unlimited Possibilities") indicates that the polyamide BMACM.12 exhibits a glass transition temperature of 155°C and absorbs 3.0% by weight of water at 23°C under saturated conditions. It is also indicated that components made of Grilamid® TR90 can become hazy (whitening) during prolonged exposure in water to temperatures of greater than 80°C.

The abovementioned documents have demonstrated that transparent amorphous polyamides exhibiting a high glass transition temperature are known. In some applications, these transparent amorphous polyamides are used in preference to other transparent amorphous polymers, such as PMMA (poly (methyl methacrylate)) or PC (polycarbonate), as they exhibit better resistance to solvents and to the stress cracking phenomenon.

A high glass transition temperature makes it possible to imagine components made of transparent amorphous polyamides which can function at high operating temperatures, whether for short periods of time, which reflects the common notion of HDT ("Heat Distortion Temperature"), or for longer periods of time, which reflects the common notion of CUT ("Continuous Use Temperature"). However, the abovementioned transparent amorphous polyamides can absorb up to 3.5% or more by weight of water at 23°C under saturated conditions. The water thus absorbed has a well known plasticizing effect which results, in fact, in a decrease in the glass transition temperature. It is therefore desirable to have available transparent amorphous polyamides exhibiting a high glass transition temperature but having a limited water absorption.

It has now been found that polyamides resulting from the condensation of diamines, preferably cycloaliphatic diamines, and of tetradecanedioic acid or of mixtures of acids comprising at least 50 mol% of tetradecanedioic acid have all these advantages. The Applicant Company has discovered that these polyamides are amorphous and transparent and have good mechanical properties of stiffness and of toughness, good chemical resistance, good stress crack resistance, a high heat distortion temperature and a low moisture absorption.

### Brief description of the invention

The present invention relates to a transparent amorphous polyamide which results from the condensation:
- of at least one diamine chosen from aromatic, arylaliphatic and cycloaliphatic diamines,
- of tetradecanedioic acid or of a mixture comprising at least 50 mol% of tetradecanedioic acid and at least one diacid chosen from aliphatic, aromatic and cycloaliphatic dicarboxylic acids.

The invention also relates to a composition comprising, by weight, 1 to 100% of the preceding polyamide and 99 to 0% of a semicrystalline polyamide.

The invention also relates to the objects composed of the composition of the invention, such as panels, films, sheets, pipes, profiles or objects obtained by injection moulding.

The invention also relates to objects covered with a transparent protective layer composed of the composition of the invention.

### Detailed description of the invention

**As regards the diamines,** they are aromatic, arylaliphatic or cycloaliphatic in nature and advantageously comprise from 6 to 36 carbon atoms. They can be used alone or as mixtures. A minority of moles of diamine can optionally be substituted by linear aliphatic diamines, such as, for example, hexamethylenediamine, nonanediamine, decanediamine or dodecanediamine, or branched aliphatic diamines, such as, for example, methylpentamethylenediamine.

Among aromatic, arylaliphatic or cycloaliphatic diamines or their mixtures, arylaliphatic or cycloaliphatic diamines are preferred. Mention may be made, among arylaliphatic diamines, of, for example, meta-xylylenediamine.

Among arylaliphatic or cycloaliphatic diamines comprising from 6 to 36 carbon atoms or their mixtures, cycloaliphatic diamines are preferred. Non limiting examples of cycloaliphatic diamines and their processes of preparation are indicated in the publication "Cycloaliphatic Amines" (Encyclopaedia of Chemical Technology, Kirk-Othmer, 4th Edition (1992), pp. 386-405). These diamines often comprise several isomers because of the nature of the industrial manufacturing processes. Commercially available cycloaliphatic diamines often comprise one or two optionally substituted cycloaliphatic rings. Mention may be made, among cycloaliphatic diamines comprising a cycloaliphatic ring, of, for example, isophoronediamine (CAS [2855-13-2]), 1,4-cyclohexanediamine (CAS [3114-70-3]) or 1,3-diaminomethylcyclohexane (CAS [2579-20-6]) .

Cycloaliphatic diamines comprising two cycloaliphatic rings are preferred in this application. These diamines correspond to the general formula (I) 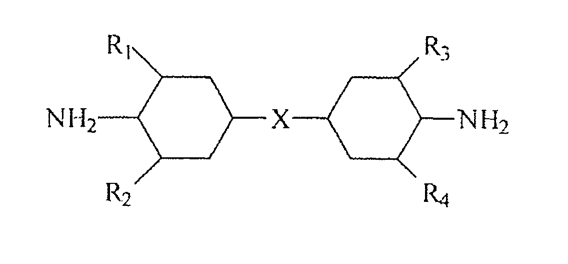 in which
R₁ to R₄ represent identical or different groups chosen from a hydrogen atom or alkyl groups of 1 to 6 carbon atoms and X represents either a single bond or a divalent group composed:
   - of a linear or branched aliphatic chain of 1 to 10 carbon atoms,
   - of a cycloaliphatic group of 6 to 12 carbon atoms,
   - of a linear or branched aliphatic chain of 1 to 10 carbon atoms substituted by cycloaliphatic groups of 6 to 8 carbon atoms,
   - of a group of 8-12 carbon atoms composed of a linear or branched dialkyl with a cyclohexyl or benzyl group.

PACM, PACP and BMACM have already been mentioned among cycloaliphatic diamines comprising at least two cycloaliphatic rings. Mention may also be made of the diamines bis(3,5-dialkyl-4-aminocyclohexyl)methane, -ethane, -propane or -butane. These diamines and their process of preparation are disclosed in Patent **US 4 293 687**.

**As regards the tetradecanedioic acid** (or its anhydride), the processes for producing this acid (or its anhydride) do not form part of the subject-matters of the invention. One method for producing linear dicarboxylic acids consists of the biofermentation of alkanes or of corresponding alkyl esters. This technology is used by Kaleys (formerly Cathay Biotechnology Company), which sells linear dicarboxylic acids comprising from 9 to 18 carbon atoms. Tetradecanedioic acid (or its anhydride) is available commercially from this company.

Tetradecanedioic acid can be replaced in a proportion of at most 50 mol%, preferably 30 mol%, by other aliphatic, aromatic or cycloaliphatic dicarboxylic acids or their mixtures. Mention may be made, among other aliphatic dicarboxylic acids, of, for example, linear or branched acids comprising from 6 to 20 carbon atoms and in particular adipic acid, suberic acid, azelaic acid, sebacic acid or dodecanedioic acid. Mention may be made, among optionally substituted aromatic dicarboxylic acids, of, for example, isophthalic acid, terephthalic acid or naphthalenedicarboxylic acid. Mention may be made, among optionally substituted cycloaliphatic dicarboxylic acids, of, for example, cyclohexanedicarboxylic acid.

**As regards the blends of the preceding polyamide with a semicrystalline polyamide,** mention may be made, as example of semicrystalline polyamide, of polyamides based on hexamethylenediamine (PA 6-9, 6-10, 6-12, 6-14), on nonanediamine (PA 9-10, 9-12, 9-14), on decanediamine (PA 10-10, 10-12, 10-14), on dodecanediamine (PA 12-10, 12-12, 12-14), and PA 10, PA 11 and PA 12. Mention may also be made of copolyamides 11/12 having either more than 90% of 11 units or more than 90% of 12 units. These polyamides result from the condensation of 11-aminoundecanoic acid with lauryllactam (or C₁₂ α,ω-amino acid). The blend can be produced in the molten state in the usual devices, such as, for example, an extruder. A catalyst can be added. This can also be the remnant of the optional catalyst used for the preparation of the amorphous polyamide or for the preparation of the semicrystalline polyamide. This is advantageously an organic or inorganic catalyst and this is preferably phosphoric acid or hypophosphoric acid. The amount of catalyst can be up to 3000 ppm with respect to the weight of the amorphous polyamide and of the semicrystalline polyamide and advantageously between 50 and 1000 ppm. Such catalysts are disclosed in Patent EP 550 308.

**As regards the preparation of the polyamides of the invention,** use may be made of any conventional process for the synthesis of polyamides and copolyamides by condensation of the corresponding monomers. The synthesis can be carried out in the presence of a catalyst. This is advantageously an organic or inorganic catalyst and this is preferably phosphoric acid or hypophosphoric acid. The amount of catalyst can be up to 3000 ppm with respect to the weight of the amorphous polyamide and advantageously between 50 and 1000 ppm. The transparent amorphous polyamides according to the invention and their blends or alloys with one or more other polyamides can also comprise additives. Mention may be made, as example of additives which can be used, of reinforcing or non-reinforcing fillers, heat or UV stabilizers, internal or external lubricants, plasticizers, flame retardants, pigments and dyes, conductive or static-dissipative fillers, impact modifiers or chain-termination agents.

The transparent amorphous polyamides according to the invention and their blends or alloys with one or more other polyamides can be processed by known technologies for the conversion of thermoplastics, such as, for example, injection moulding or coinjection moulding, the extrusion of sheets, films, panels, profiles, filaments, pipes or tubing, or the extrusion-blow moulding of flasks, bottles or tanks. The objects which can be produced according to these technologies are also a subject-matter of the invention.

### Examples

### Examples 1, 2 (Comparative), 3 and 4 (According to the invention)

### Example 1

The following monomers are introduced into a reactor equipped with a stirrer: 13.76 kg (57.82 mol) of Laromin 260 (BMACM supplied by BASF), 11.47 kg (56.7 mol) of sebacic acid, 25.2 g of phosphoric acid and 505 g of H₂O. The mixture thus formed is placed under an inert atmosphere and is heated until the temperature reaches 280°C and 20 bar of pressure. After maintaining for 2 h, a pressure-reducing operation is subsequently carried out for 1 h to return to atmospheric pressure. The polycondensation is continued at 280°C for approximately 2 h while flushing with nitrogen until the desired viscosity of the polymer is achieved. The final product has an intrinsic viscosity of 1.2 dl/g.

### Example 2

Example 1 is repeated with the following monomers introduced into a reactor equipped with a stirrer: 13.52 kg (57.79 mol) of Laromin 260 (BASF), 13.18 kg (57.22 mol) of dodecanedioic acid (from Cathay Biotechnology, with a very high purity of > 99%), 26.7 g of phosphoric acid and 534 g of H₂O.

### Example 3

Example 1 is repeated with the following monomers introduced into a reactor equipped with a stirrer: 12.0 kg (50.4 mol) of Laromin 260 (BASF), 13.0 kg (50.4 mol) of tetradecanedioic acid, 25 g of phosphoric acid and 500 g of H₂O.

### Example 4

The following monomers are introduced into a reactor equipped with a stirrer: 12.67 kg (53.22 mol) of Laromin 260 (BASF), 5.05 kg (25 mol) of sebacic acid and 7.28 kg (28.23 mol) of tetradecanedioic acid, 25 g of phosphoric acid and 500 g of H₂O.

The results of the tests are found in the following table.

| Ex. | Description | Intrinsic viscosity in dl/g | Tg (°C) | Water uptake (after 13 days) (% by weight) | Water uptake (after 43 days) (% by weight) |
|---|---|---|---|---|---|
| 1* | BMACM.10 | 1.21 | 165 | 3.4 | 3.8 |
| 2* | BMACM.12 | 1.19 | 156 | 2.6 | 2.9 |
| 3** | BMACM.14 | 1.16 | 146 | 2.2 | 2.4 |
| 4** | BMACM.14/ BMACM.10 | 1.18 | 157 | 2.5 | 2.8 |

| | | | | | |
|---|---|---|---|---|---|
| * Comparative | | | | | |
| ** According to the invention | | | | | |

### Example 5

The following monomers are introduced into a reactor equipped with a stirrer: 12.7 kg (60.58 mol) of PACM (sold under the name PACM20 by Air Products) and 15.63 kg (60.58 mol) of tetradecanedioic acid, 28.3 g of phosphoric acid and 566 g of H₂O.

| Ex. | Description | Intrinsic viscosity in dl/g | Tg (°C) | Water uptake (after 13 days) (% by weight) | Water uptake (after 43 days) (% by weight) |
|---|---|---|---|---|---|
| 5** | PACM.14 | 1.20 | 129 | 2.2 | 2.7 |

| | | | | | |
|---|---|---|---|---|---|
| ** According to the invention | | | | | |

The intrinsic viscosities, measured in meta-cresol, were recorded according to the ISO 307 (1994) method at 20°C. The values of the water uptake at 23°C by immersion in water were obtained according to the ISO 62 (1980) method on samples with a thickness of 1 mm. The glass transition temperatures were measured by DSC according to the ISO 11357-3 (1999) method.

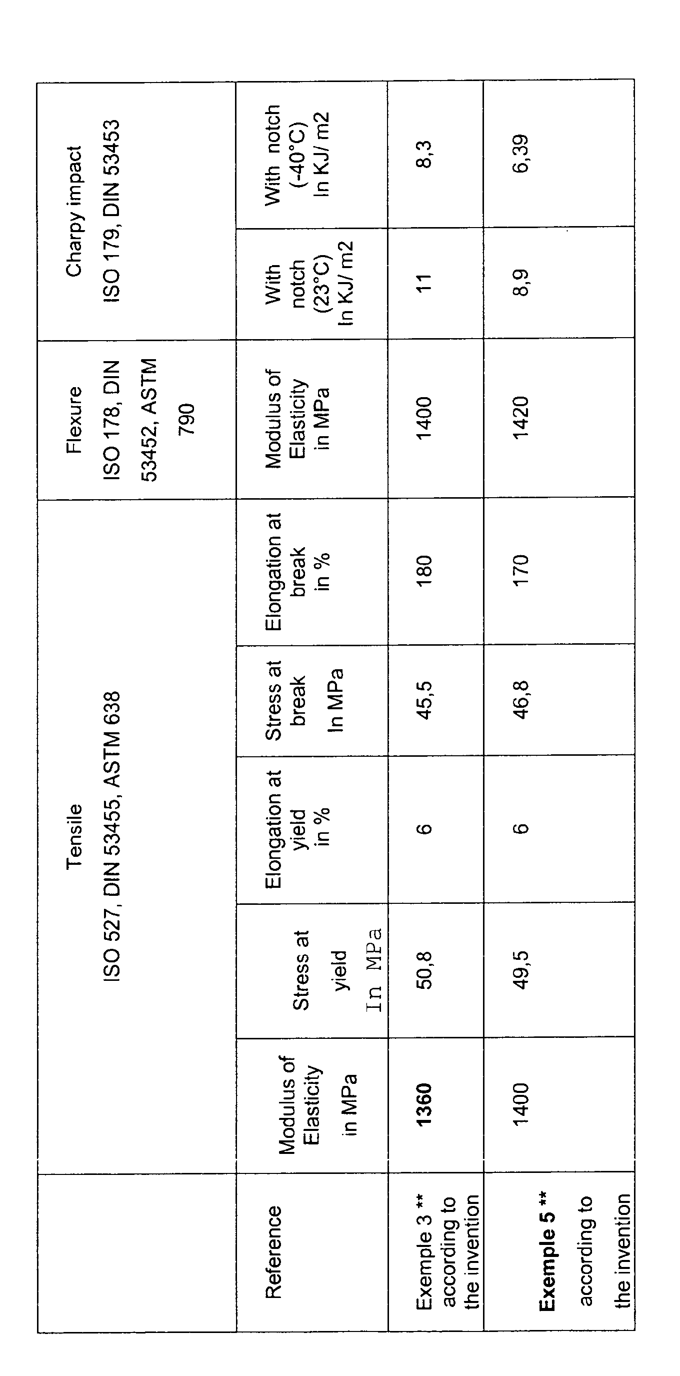

## Claims

1. Transparent amorphous polyamide which results from the condensation:
• of at least one diamine chosen from aromatic, arylaliphatic and cycloaliphatic diamines,
• of tetradecanedioic acid or of a mixture comprising at least 50 mol% of tetradecanedioic acid and at least one diacid chosen from aliphatic, aromatic and cycloaliphatic dicarboxylic acids.

2. Polyamide according to Claim 1, in which the diamines have the following formula: 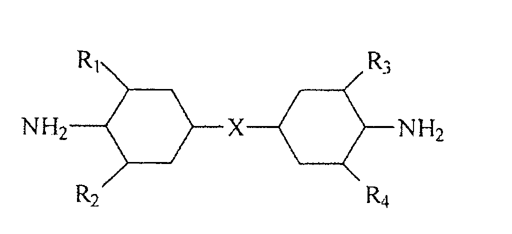 in which
R₁ to R₄ represent identical or different groups chosen from a hydrogen atom or alkyl groups of 1 to 6 carbon atoms and X represents either a single bond or a divalent group composed:
• of a linear or branched aliphatic chain of 1 to 10 carbon atoms,
• of a cycloaliphatic group of 6 to 12 carbon atoms,
• of a linear or branched aliphatic chain of 1 to 10 carbon atoms substituted by cycloaliphatic groups of 6 to 8 carbon atoms,
• of a group of 8-12 carbon atoms composed of a linear or branched dialkyl with a cyclohexyl or benzyl group.

3. Polyamide according to either one of the preceding claims, in which the tetradecanedioic acid is replaced by a mixture comprising at least 70 mol% of tetradecanedioic acid and at least one diacid chosen from aliphatic, aromatic and cycloaliphatic dicarboxylic acids.

4. Composition comprising, by weight, 1 to 100% of the amorphous polyamide of any one of the preceding claims and 99 to 0% of a semicrystalline polyamide.

5. Composition according to Claim 4, comprising additives chosen from reinforcing or non-reinforcing fillers, heat or UV stabilizers, internal or external lubricants, plasticizers, flame retardants, pigments and dyes, conductive or static-dissipative fillers, impact modifiers or chain-termination agents.

6. Composition according to any one of the preceding claims, comprising a catalyst.

7. Objects composed of the composition of any one of the preceding claims, such as panels, films, sheets, pipes, profiles or objects obtained by injection moulding.

8. Objects covered with a transparent protective layer composed of the composition of any one of Claims 1 to 6.

9. Process for the preparation of the amorphous polyamides of any one of Claims 1 to 3 by condensation of the monomers in the presence of a catalyst.

10. Process for the preparation of the composition of Claim 4 by blending the constituents in the molten state in the presence of a catalyst.
